Europäisches Patentamt

European Patent Office

Office européen des brevets

(19)

(11) Veröffentlichungsnummer : **0 185 986**
**B1**

(12) **EUROPÄISCHE PATENTSCHRIFT**

(45) Veröffentlichungstag der Patentschrift :
17.05.89

(51) Int. Cl.⁴ : **G 01 N 3/02, B 23 K 28/00**

(21) Anmeldenummer : **85115369.2**

(22) Anmeldetag : **04.12.85**

(54) **Verfahren zum Prüfen von Punktschweissverbindungen sowie Vorrichtung zur Durchführung des Verfahrens.**

(30) Priorität : **22.12.84 DE 3447047**

(43) Veröffentlichungstag der Anmeldung :
**02.07.86 Patentblatt 86/27**

(45) Bekanntmachung des Hinweises auf die Patenterteilung : **17.05.89 Patentblatt 89/20**

(84) Benannte Vertragsstaaten :
**DE FR GB IT SE**

(56) Entgegenhaltungen :
**GB—A— 2 114 305**
**US—A— 2 959 051**
**US—A— 3 212 326**
**US—A— 4 027 529**
**WELDING JOURNAL, Band 60, Nr. 2, Februar 1981, Seiten 34-37, Miami, Florida, US; D.E. SMITH et al.: "Mechanical testing of welds: Part II - Bend testing of welds ... a summary"**

(73) Patentinhaber : **AUDI AG**
**Postfach 220**
**D-8070 Ingolstadt (DE)**

(72) Erfinder : **Singh, Sumanjit, Dr.-Ing.**
**Ahornweg 40**
**D-8074 Gaimersheim (DE)**

(74) Vertreter : **Engelhardt, Harald**
**Audi AG Postfach 2 20**
**D-8070 Ingolstadt (DE)**

## Beschreibung

Die Erfindung bezieht sich auf ein Verfahren zum Prüfen von Punktschweißverbindungen sowie auf eine Vorrichtung zur Durchführung dieses Verfahrens. Eine Vorrichtung gemäß dem Oberbegriff des Anspruchs 3 ist aus US-A-4027529 bekannt.

Die Lebensdauer von Werkzeugen für Punktschweißmaschinen bei verschiedenen Maschineneinstellungen wird an Hand von Elektrodenstandmengenversuchen ermittelt. Dabei wird unter anderem untersucht, bei welcher Maschineneinstellung und welchen Randbedingungen die mechanischen und thermischen Beanspruchungen der Elektroden am geringsten sind und damit ihr Einsatz am wirtschaftlichsten ist.

Die am meisten angewandte Methode ist der rein manuelle Elektrodenstandmengenversuch. Dabei werden auf Blechtafeln Schweißpunkte gesetzt. Zwischendurch werden in regelmäßigem Abstand Einzelproben angefertigt und im freien Scherzugversuch geprüft. Wird dabei eine bestimmte, für den jeweiligen Werkstoff festgelegte Mindestfestigkeit unterschritten, ist den Versuch damit beendet. Die bis dahin geschweißten Punkte werden addiert und als Elektrodenstandmenge unter Beachtung der gewählten Schweißparameter registriert.

Der bei dieser Methode angewandte manuelle Werkstoffvorschub kann sich nachteilig auf die Qualitätsaussage auswirken, da durch unterschiedliche Punktabstände die Nebenschlüsse bei jeder Schweißung verschieden sind und sich dadurch die eingebrachte Wärmemenge und damit auch die thermische Belastung der Elektroden ständig ändert. Die Erstellung der Einzelproben erlaubt außerdem keine konstante Taktzeit, so daß durch die entstehenden Pausen eine starke Abkühlung der Elektroden eintritt.

Durch .die abweichenden Temperaturen im Stromkreis sind die Verhältnisse bei den Versuchen nicht identisch mit denen in der Praxis.

Zur Vermeidung dieser Nachteile ist es bereits bekannt, eine Maschine mit einem automatischene Blechvorschub einzusetzen. Sie umfaßt eine Taktvorschubeinheit mit variablem Hub (zur Erzeugung unterschiedlicher Punktabstände) und einstellbarer Taktzeit, so daß einerseits der Einfluß auf die Elektrodenstandmenge erfaßt und andererseits ein gleichmäßiger Werkstoffvorschub möglich ist. Zur Erstellung der erforderlichen Einzelproben muß jedoch auch hier der Versuch unterbrochen und die damit verbundenen Beeinträchtigungen des Versuchsergebnisses in Kauf genommen werden.

Zur Prüfung der Punktschweißverbindungen sind verschiedene, zerstörende Prüfungen bekannt :

— der Dauerschwingversuch
— die metallographische Untersuchung
— der Scherzugversuch
— der Kopfzugversuch
— der Torsionsversuch

— der Schäl-, Abroll- und Meißelversuch.

Für die praktische Durchführung hat sich gezeigt, daß der Schälversuch zur Beurteilung von Punktschweißverbindungen gut geeignet ist und den Vorteil aufweist, daß im Gegensatz zu den übrigen oben genannten Prüfverfahren keine Einzelproben notwendig sind, deren Herstellung und Prüfung einen hohen technischen und zeitlichen Aufwand erfordern. Beim Schälversuch werden meistens Einzel- oder Serienpunktschweißungen in einfachen Prüfvorrichtungen oder direkt am Objekt ohne Erfassen eines bestimmten Meßwertes bis zum Bruch beansprucht. Die Art des Bruches und die Größe des ausgerissenen Schweißbutzens bzw. der abgescherten Fläche sind Beurteilungshilfen für die Güte der Verbindung.

Bei der Durchführung des Schälversuches — insbesondere bei tiefziehfähigen Blechen — kann es vorkommen, daß der zuerst geprüfte Schweißpunkt ausknöpft und die Fahne am Butzen nicht abreißt. Im weiteren Verlauf reißt dadurch der Blechwerkstoff zu beiden Seiten der Schweißpunkte auf, so daß das Meßergebnis nicht auf die erzielte Festigkeit der Schweißpunkte, sondern sich auf die Festigkeit des verwendeten Blechwerkstoffes bezieht. Dieser Effekt ist insbesondere bei dünnen Blechen, insbesondere solchen bis 1 mm Dicke zu beobachten. Diese Blechstärke ist jedoch für Punktschweißverbindungen — beispielsweise im Automobilbau — sehr bedeutsam.

Wie Versuche gezeigt haben, kann das unerwünschte Schälen der Bleche durch Änderung der Abstände der Schweißpunkte oder durch eine angepaßte Abzugsgeschwindigkeit nicht immer beeinflußt werden.

Zur Prüfung der Festigkeit von einzelnen Schweißpunkten wird in der US-A-4 027 529 eine Vorrichtung beschrieben, bei der ein Prüfstück in die Vorrichtung eingespannt und dort von Hand ein Schälversuch durchgeführt werden kann. Das Prüfstück besteht aus zwei Winkelstücken, welche durch einen Schweißpunkt zu einem T-förmigen Teil zusammengefügt sind. Die jeweils freien Schenkel der Winkelstücke sind mit je einer Bohrung versehen, durch welche das Prüfstück in die Vorrichtung einhängbar ist. Zu diesem Zweck ist die Vorrichtung mit zwei Bolzen ausgerüstet, wobei sich der eine an dem stationären Abschnitt der Vorrichtung befindet und der andere in Verbindung mit einem Hebel steht. Wird der um eine Achse schwenkbeweglich gelagerte Hebel niedergedrückt, dann entfernen sich die Bolzen voneinander und das an ihnen festgelegte Prüfstück wird an seiner Verbindungsstelle aufgetrennt.

Der vorliegenden Erfindung liegt deshalb die Aufgabe zugrunde, mit einfachen Mitteln ein Verfahren anzugeben, durch welches das unerwünschte Schälen der Bleche vermieden wird. Außerdem soll eine Vorrichtung geschaffen werden, durch welche Schweißpunkte kontinuierlich

im Schälverfahren geprüft werden.

Der das Verfahren betreffende Teil der Erfindungsaufgabe wird durch die Merkmale des Anspruchs 1 gelöst.

Durch die Lochung wird bewirkt, daß die entstehende Fahne zerreißt und somit eine Prüfung des nächsten Schweißpunktes möglich ist. Von großem Vorteil ist, daß es durch das erfindungsgemäße Verfahren möglich wird, eine kontinuierliche Prüfung einer langen Reihe von Schweißpunkten durchzuführen und dabei für jeden Schweißpunkt eine Aussage zu erhalten. Diese Aussage kann beispielsweise durch einen X- Y-Schreiber aufgezeichnet werden, so daß die erforderliche Schälkraft für jeden einzelnen Schweißpunkt dokumentiert wird.

Die Art und die Größe der Lochung läßt sich in Versuchen leicht ermitteln. Gute Ergebnisse wurden mit einem Lochdurchmesser erzielt, welcher etwa 75 % des Durchmessers der Schweißlinse betrug.

Es hat sich gezeigt, daß es zweckmäßig ist, die Lochung der Bleche jeweils nach dem Setzen der Schweißpunkte durchzuführen, da in der umgekehrten Reihenfolge während des Schweißens ein unvermeidbarer Nebenschluß auftreten würde, unter anderem aufgrund des durch das Lochen entstehenden Grats. Die erforderlichen Löcher können besonders wirtschaftlich durch Stanzen erzeugt werden.

Der auf die Vorrichtung gerichtete Teil der Erfindungsaufgabe wird durch die Merkmale des Anspruchs 3 gelöst.

Durch diese Vorrichtung ist es möglich, einen Elektrodenstandmengenversuch vollautomatisch durchzuführen. Dabei können zwei Blechbänder beispielsweise mit Hilfe einer pneumatisch arbeitenden Taktvorschubeinheit von Coils abgewickelt, anschließend geschweißt und gelocht werden. Ein Elektromotor kann den weiteren Transport der Blechbänder übernehmen. In der Prüfvorrichtung werden die Blechbänder nach dem Schälprinzip getrennt und können anschließend — zur besseren Abfallbeseitigung — mit einer Schlagschere zerkleinert werden.

Bezüglich der Steuerung für den Vorschub/Transport der Blechbänder sind viele Antriebe und Steuerungen möglich.

Wenn geeignete Maßnahmen getroffen werden, ist es ohne weiteres möglich, die Schälkraft jedes einzelnen Schweißpunktes aufzuzeichnen und/oder auszuwerten. So können beispielsweise die beim Prüfen der Schweißpunkte auftretenden Drehmomente von einer Drehmomentenmeßwelle aufgenommen und in einem Rechner über den Drehwinkel integriert werden. Der so ermittelte Wert wird mit einem in Vorversuchen (Eichung) errechnetem Mindestwert für die Schweißpunktfestigkeit verglichen. Ein Unterschreiten dieses Mindestwertes hat automatisch eine sofortige Unterbrechung des Elektrodenstandmengenversuchs oder eine entsprechende Änderung der Maschineneinstellung zur Folge. Über einen X- Y-Schreiber lassen sich alle Werte in einfacher Weise registrieren.

Gemäß einem Merkmal einer Ausführungsform der Erfindung kann ein gesteuerter Antrieb zum Vorschub von auf Coils aufgewickelten Blechstreifen Verwendung finden, wenn die Haspel mit einer Bremse ausgestattet ist, um die beschleunigten Massen auf kurzem Weg abzubremsen.

Eine der Erfindung ähnliche Vorrichtung ist Gegenstand von EP-A-187957 mit Priorität vom 22.12.84 ; Veröffentlichungstag : 23.7.86.

Die Erfindung wird in der Zeichnung näher dargestellt und beschrieben. Es zeigt

Fig. 1  in perspektivischer Darstellung einen Schälversuch mit mehreren Schweißpunkten in herkömmlicher Weise,

Fig. 2  ein Kraft-Weg-Diagramm, welches die Verhältnisse bei der Durchführung des Versuches nach Fig. 1 wiedergibt,

Fig. 3  nebeneinander angeordnet eine Schälprobe, wobei die Probe zuvor mit Löchern versehen wurde,

Fig. 4  ein Kraft-Weg-Diagramm, entstanden bei dem Schälversuch nach Fig. 3,

Fig. 5  eine schematisch dargestellte Vorrichtung zur Durchführung von Elektrodenstandmengenversuchen,

Fig. 6  die Prüfeinrichtung der Vorrichtung aus Fig. 5.

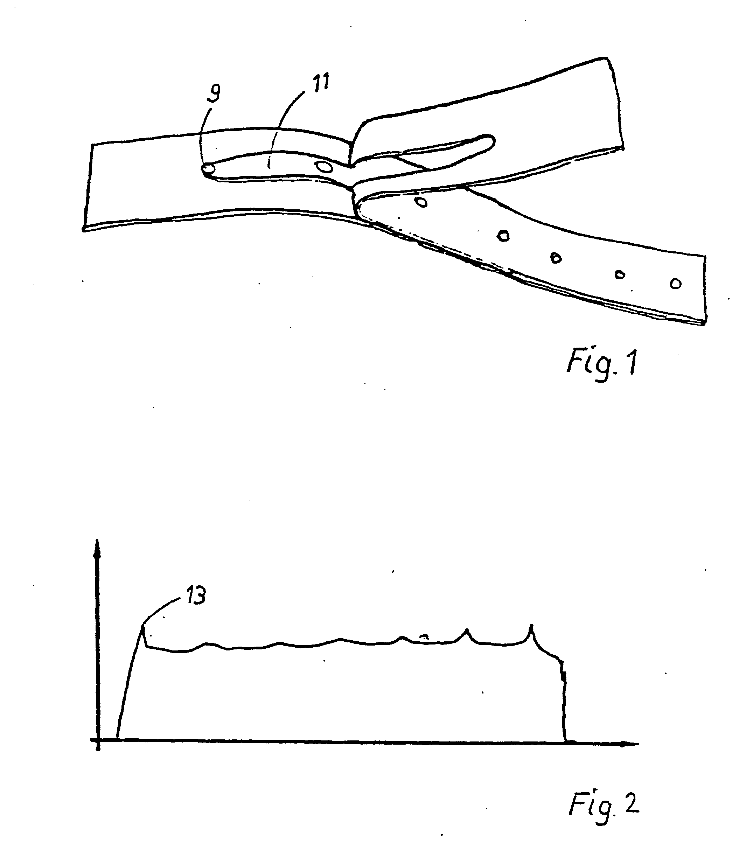

Versucht man, während eines Schälversuches nicht nur einen Schweißpunkt, sondern mehrere, hintereinander angeordnete Schweißpunkte zu prüfen, tritt folgendes, in Fig. 1 dargestelltes Problem auf : Beim Schälen knöpft der zuerst geprüfte Schweißpunkt 9 aus, die verbleibende Fahne 11 am Butzen reißt jedoch nicht ab. Dadurch schält sich im weiteren Verlauf der Blechwerkstoff zu beiden Seiten der Schweißpunkte mit Richtung auf die Blechkanten auf, so daß eine Messung nicht die gewünschte Punktfestigkeit, sondern einen Hinweis auf die Festigkeit des Blechwerkstoffes ergeben würde.

In Fig. 2 ist der in Fig. 1 dargestellt Versuchsablauf auf einen X- Y-Schreiber wiedergegeben. Wie daraus zu ersehen ist, kann die Schälkraft (auf der Ordinate angetragen) für den ersten Schweißpunkt 9 noch eindeutig ermittelt werden. Sie ist in Fig. 2 mit 13 gekennzeichnet. Die Lage der folgenden Punkte ist zwar andeutungsweise (Spitzen) zu erkennen, eine Aussage über ihre Festigkeit und Arbeitsaufnahmevermögen kann jedoch nicht erfolgen.

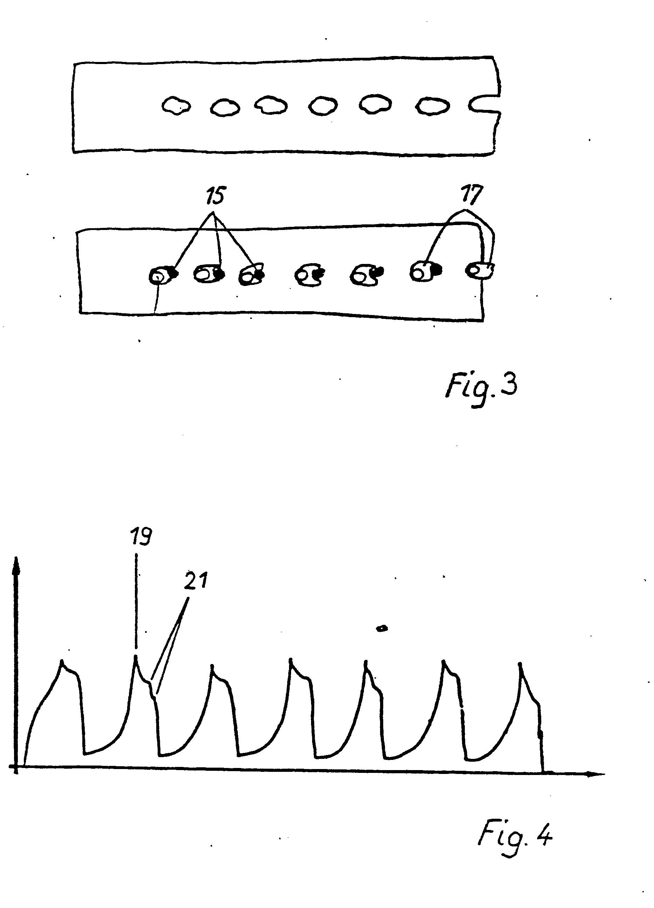

In den Fig. 3 und 4 ist der gleiche Schälversuch wiedergegeben, jedoch mit dem Unterschied, daß vor Durchführung des Schälversuches nach jedem Schweißpunkt ein Loch 15 gebohrt wurde. Es hat sich gezeigt, daß ein Lochdurchmesser, der etwa 75 % des Durchmessers der Schweißlinse beträgt, bei den Versuchen mit 1 mm starken Blechen vollauf genügte. In Fig. 3 deutlich erkennbar ist das Zerreißen der jetzt durch die Löcher 15 geschwächten, restlichen Fahren 17.

In dem Kraft-Weg-Diagramm nach Fig. 4 ist mit 19 das Ausknöpfen eines Schweißpunktes markiert, während das Bezugszeichen 21 die Kraftspitzen kennzeichnet, welche beim Zerreißen der restlichen Fahne 17 entstehen.

Das Bild 5 gibt die Systemkomponenten wieder, welche für einen automatischen Elektronenstandmengenversuch notwendig sind. Zwei Blechbänder 23 werden mit Hilfe einer pneumatisch arbeitenden Taktvorschubeinheit 25 von Coils 27 abgewickelt, anschließend durch eine Schweißeinrichtung 29 geschweißt und durch eine Stanze 31 gelocht. Die Taktvorschubeinheit 25 ist so gesteuert, daß während der Stillstandphasen gleichzeitg Schweißpunkte gesetzt und Löcher gestanzt werden. Die Anordnung der Schweißpunkte folgt in Reihe hintereinander, die Anordnung der Löcher so, daß nach jedem Schweißpunkt in Transportrichtung ein Loch folgt.

Der Stanze 31 nachgeordnet ist ein Elektromotor 33, welcher den weiteren Transport der Blechbänder 23 übernimmt. In einer Prüfeinrichtung 35 werden sie nach dem Schälprinzip getrennt und zur problemloseren Abfallbeseitigung mit einer nachgeschalteten Schlagschere 37 zerkleinert.

Die beim Prüfen der Schweißpunkte auftretenden Drehmomente werden von einer Drehmomentmeßwelle 39 erfaßt und in einem Rechner über den Drehwinkel integriert. Der ermittelte Wert wird mit einem in Vorversuchen (Eichung) errechneten Mindestwert für die Schweißpunktfestigkeit verglichen. Ein Unterschreiten dieses Mindestwertes kann automatisch eine sofortige Unterbrechung des Elektrodenstandmengenversuchs zur Folge haben.

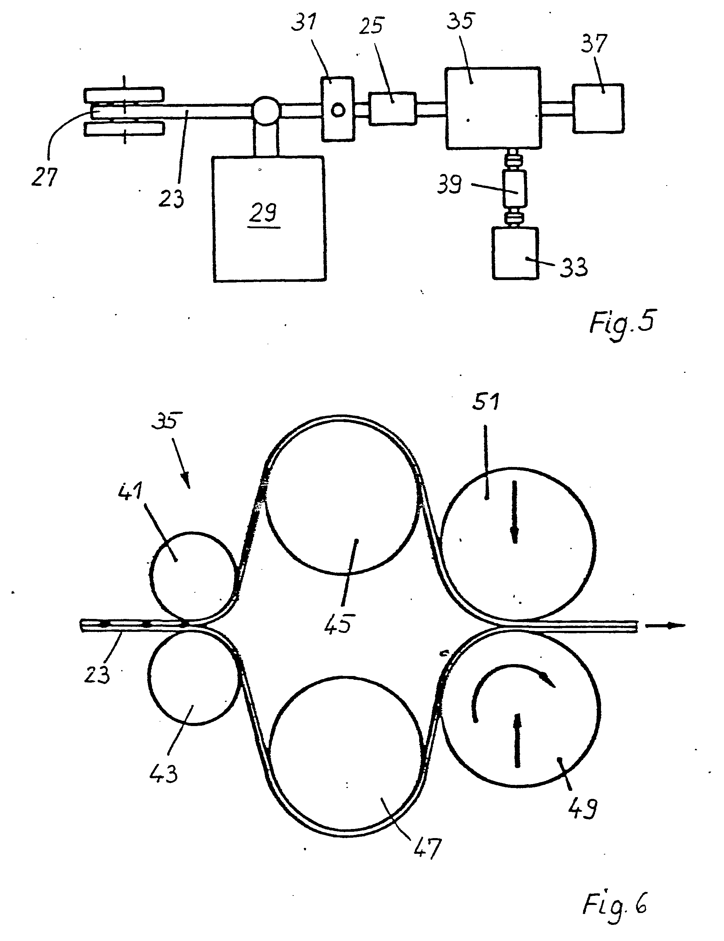

In Fig. 6 ist das Funktionsprinzip der Prüfeinrichtung 35 bei Anwendung des Schälverfahrens näher dargestellt. Nachdem die Blechbänder 23 verschweißt und gestanzt sind und die Taktvorschubeinheit 25 verlassen haben, werden sie zwischen zwei Rollen 41 und 43 geführt und dabei in gegensätzlicher Richtung umgelenkt, wobei das Schälen in Erscheinung tritt. Durch ein nochmaliges Umlenken mit Hilfe von zwei weiteren Rollen 45 und 47 sowie durch eine Antriebsrolle 49 und eine Druckrolle 51 werden die Blechbänder 23 in ihre ursprüngliche, horizontale Lage zusammengeführt.

Da es durch die Taktvorschubeinheit 25 nur möglich ist, relativ geringe Kräfte, und nicht die erforderlichen Schälkräfte aufzubringen, scheidet die Möglichkeit aus, die Taktvorschubeinheit 25 hinter die Prüfeinrichtung 20 zu setzen und damit sowohl den Blechvorschub als auch das Schälen zu übernehmen. Deshalb ist für den Schälvorgang ein gesonderter Antrieb notwendig, wobei es wichtig ist, daß die Blechbänder 23 gleichmäßig und synchron bewegt werden, da andernfalls der Ort, an dem das Schälen stattfindet, sich unkontrolliert verändert und damit eine Meßwertverfälschung nicht ausgeschlossen werden kann. Gemäß dem Ausführungsbeispiel wird der gesonderte Vorschub dadurch erzeugt, daß die Blechbänder 23 von den Rollen 49 und 51 zusammengedrückt werden, so daß eine reib- und formschlüssige Kraftübertragung durch die antreibende Rolle (Antriebsrolle 49) möglich ist.

**Patentansprüche**

1. Verfahren zum Prüfen von Punktschweißverbindungen, wobei zwei Blechstreifen durch in Reihe angeordnete Schweißpunkte miteinander verbunden werden und anschließend die Schweißpunkte durch Schälen geprüft werden, dadurch gekennzeichnet, daß die Bleche vor dem Schälen gelocht werden, derart, daß in Prüfrichtung jedem Schweißpunkt ein Loch folgt.

2. Verfahren nach Anspruch 1, dadurch gekennzeichnet, daß die Lochung der Bleche jeweils nach dem Setzen der Schweißpunkte erfolgt.

3. Vorrichtung zum Prüfen von durch Punktschweißung verbundenen Blechstreifen (23) mit einer Prüfvorrichtung (35), die nach dem Schälprinzip die Blechstreifen auftrennt, und zur Durchführung des Verfahrens nach Anspruch 1 oder 2, gekennzeichnet durch folgende Merkmale :

a) die Vorrichtung umfaßt eine Punktschweißeinrichtung (29), eine Stanze (31), die Prüfeinrichtung (35) sowie eine Taktvorschubeinheit (25) ;
b) die Taktvorschubeinheit (25) bewegt zwei übereinander angeordnete Blechstreifen (23) nacheinander durch

— die Punktschweißeinrichtung (29), in der die Blechstreifen (23) durch in Reihe angeordnete Schweißpunkte miteinander verbunden werden,
— die Stanze (31), welche nach jedem Schweißpunkt ein Loch stanzt und
— die Prüfvorrichtung (35), welche nach dem Schälprinzip die Blechstreifen (23) auftrennt ;
c) die Taktvorschubeinheit (25) ist so gesteuert, daß während der Stillstandsphasen die Schweißung und das Stanzen der Blechstreifen (23) erfolgt und während der Phasen gleichförmiger Vorschubbewegung das Prüfen durchgeführt wird.

4. Vorrichtung nach Anspruch 3, dadurch gekennzeichnet, daß die Blechstreifen (23) von Coils (27) abgewickelt werden und für den Vorschub an Stelle einer Taktvorschubeinheit ein gesteuerter Antrieb der Coils (27) eingesetzt ist.

**Claims**

1. Method for testing spot-welded joints in which two sheet metal strips are joined to one another by spot-welds positioned in a row and the spot-welds are then tested by peeling, characterized in that the metal sheets are perforated before the peeling in such a way that a hole follows each spot-weld in the direction of testing.

2. Method according to Claim 1, characterized in that in each case the perforation of the metal sheets takes place after the application of the spot-welds.

3. Device for testing sheet metal strips (23) joined by spot-welding with a test device (35) which separates the sheet metal strips using the peeling principle and for carrying out the method according to Claim 1 or 2, characterized by the following features :

a) the device consists of a spot-welding device (29), a punch (31), the test device (35) and a cyclic feed unit (25) ;

b) the cyclic feed unit (25) moves two sheet metal strips (23) positioned one above the other in sequence through

— the spot-welding device (29), in which the sheet metal strips (23) are joined to one another by spot-welds positioned in a row,

— the punch (31), which punches a hole after each spot-weld, and

— the test device (35), which separates the sheet metal strips (23) using the peeling principle ;

c) the cyclic feed unit (25) is controlled so that the welding and the punching of the sheet metal strips (23) take place during the stationary phases and the testing is carried out during the phases of even feed movement.

4. Device according to Claim 3, characterized in that the sheet metal strips (23) are unwound from coils (27) and a controlled drive of the coils (27) is used for the feed instead of a cyclic feed unit.

**Revendications**

1. Procédé de vérification d'assemblages par soudage par points, dans lequel deux rubans de tôle sont unis l'un à l'autre par des points de soudage disposés en rangée, puis les points de soudage sont éprouvés par arrachement, caractérisé en ce qu'avant l'arrachement, les tôles sont percées de telle manière qu'un trou fasse suite à chaque point de soudage dans la direction d'essai.

2. Procédé selon la revendication 1, caractérisé en ce que le perçage des tôles est effectué après la formation de chacun des points de soudage.

3. Appareil d'essai de rubans de tôle (23) assemblées par soudage par points, comportant un dispositif d'essai (35) qui sépare les rubans de tôle suivant le principe de l'arrachement, pour l'exécution du procédé selon la revendication 1 ou 2, caractérisé par les caractéristiques suivantes :

a) l'appareil comprend un dispositif de soudage par points (29), une poinçonneuse (31), le dispositif d'essai (35), ainsi qu'une unité d'avancement pas à pas (25) ;

b) l'unité d'avancement pas à pas (25) déplace deux rubans de tôle superposés (23), successivement à travers

— le dispositif de soudage par points (29), dans lequel les rubans de tôle (23) sont assemblés l'un à l'autre par des points de soudage disposés en rangée,

— la poinçonneuse (31), qui perce un trou après chaque point de soudage,

— le dispositif d'essai (35), qui sépare les rubans de tôle (23) suivant le principe de l'arrachement ;

c) l'unité d'avancement pas à pas (25) est commandée de telle manière que le soudage et le perçage des rubans de tôle (23) soient exécutés pendant les phases d'immobilisation et que la vérification soit effectuée pendant les phases de mouvement d'avance uniforme.

4. Appareil selon la revendication 3, caractérisé en ce que les rubans de tôle (23) sont déroulés à partir de bobines (27), et en ce qu'un mécanisme commandé d'entraînement des bobines (27) est utilisé pour l'avancement à la phase de l'unité d'avancement pas à pas.

9
11

Fig.1

13

Fig.2

15    17

Fig. 3

19

21

Fig. 4

Fig. 5

Fig. 6